# EUROPÄISCHE PATENTSCHRIFT

(11) **EP 2 441 564 B1**
(45) Veröffentlichungstag und Bekanntmachung des Hinweises auf die Patenterteilung: **21.11.2018**
(21) Anmeldenummer: 11184956.8
(22) Anmeldetag: 13.10.2011
(51) Int. Cl.: B29C 49/64, B29C 49/06, B29C 35/08, B29C 49/12, B29C 49/36, B29C 49/48, B29C 35/16

(54) **Vorrichtung und Verfahren zum Temperieren von Kunststoffvorformlingen**
Method and device for tempering plastic pre-forms
Dispositif et procédé destinés à la thermorégulation d'ébauches en plastique

(30) Priorität: 13.10.2010 DE 102010048211
(43) Veröffentlichungstag der Anmeldung: 18.04.2012
(73) Patentinhaber: Krones AG, 93073 Neutraubling (DE)
(72) Erfinder: Hüttner, Gerald, 93073 Neutraubling (DE); Schau, Alexander, 93073 Neutraubling (DE); Stoiber, Christian, 93073 Neutraubling (DE); Deyerl, Heinrich, 93073 Neutraubling (DE); Hirdina, Jochen, 93073 Neutraubling (DE)
(74) Vertreter: Bittner, Bernhard

(56) Entgegenhaltungen:
- EP-A2- 2 208 606
- DE-A1-102009 015 519
- JP-A- H0 465 217
- JP-A- 2005 212 403
- US-A- 3 892 830
- US-A- 5 869 110

## Beschreibung

Die vorliegende Erfindung bezieht sich auf eine Vorrichtung zum Behandeln und insbesondere zum Temperieren bzw. Erwärmen von Kunststoffvorformlingen. Aus dem Stand der Technik ist es bekannt, in zweistufigen Streckblasverfahren Kunststoffbehältnisse aus sogenannten Vorformlingen bzw. Preforms herzustellen. Bei dieser Verarbeitung werden diese Vorformlinge auf eine definierte Prozesstemperatur erwärmt, um den Umformungsvorgang beim Streckblasen zu ermöglichen. Die Erwärmung wird dabei üblicherweise mittels Infrarotstrahlung realisiert. Diese Vorformlinge weisen dabei ein bereits auf Endmaß gefertigtes Mundstück und einen noch zu verformenden Körperbereich auf.

Das zu verarbeitende Material (PET) zeichnet sich dadurch aus, dass es beim Verstrecken zu einer Selbstverfestigung (als strain hardening bezeichnet) kommt. Dabei ist die Umformungstemperatur von großer Bedeutung. Dieser Effekt wird bei der Produktion von PET-Behältern genutzt, um die Wanddickenverteilung des Behälters zu optimieren. Dabei wird nach dem Stand der Technik ein Temperaturprofil, insbesondere über Infrarotstrahlung (oder auch andere Strahlungsquellen) auf den Vorformling aufgebracht. Dabei verformt sich der wärmere Bereich des Vorformlings zuerst und zwar so lange bis der sich durch die Selbstverfestigung ergebende Verstreckungswiderstand größer ist als der Widerstand des benachbarten kälteren Bereichs. Üblicherweise ist das besagte Temperaturprofil um den Umfang gleichmäßig und variiert prozessabhängig in Preform-Längsrichtung. Bei der Produktion von ovalen Behältern wird dieser Effekt jedoch nicht nur mit einer Temperaturschichtung in Längsrichtung genutzt, sondern wird auch durch unterschiedliche Temperaturschichtung um den Umfang auf das Behältnisdesign angepasst. Dieser Prozess ist auch als PreferentialHeating bekannt. Dabei sollen durch spezielle Heiztechnik die stärker zu verstreckenden Seiten stärker erwärmt werden als die schwächer zu verstreckenden Seiten. Diese genannten Heiztechniken sind durch zahlreiche Dokumente beschrieben und zum Teil auch.

Die JP-A-2005212403 beschreibt eine Anlage nach dem Oberbegriff des Anspruchs 1, sowie ein Verfahren nach dem Oberbegriff des Anspruchs 13.

Aus der US 3, 892, 830 ist ein Verfahren zur genauen Temperaturanpassung von wiederbeheizten Vorformlingen bekannt. Dabei werden diejenigen Seiten des Vorformlings, die entlang einer Hauptachse expandiert werden sollen mit strukturierten Fingern berührt, um die Temperatur abzusenken. Die US 3, 632, 13 beschreibt ein Verfahren zum Blasformen unter Verwendung eines langgestreckten ovalen Steckers. Aus der US 5, 869, 110 ist eine Vorrichtung zum Blasformen von Behältnissen bekannt. Diese Vorrichtung weist eine Heizeinrichtung zum Erwärmen eines Vorformlings auf, sowie eine Umformungseinheit, um den Vorformling umzuformen. Weiterhin ist eine Zwischenregion vorgesehen, welche eine Temperaturanpasseinrichtung aufweist, um die Temperatur wenigstens eines Teils einer Oberfläche des Vorformlings anzupassen.

Die DE 695 18 223 T3 beschreibt ebenfalls eine Vorrichtung zur Erwärmung von Vorformlingen. Dabei wird ein Temperatureinstellglied erwähnt, welches kühle Glieder aufweist, die entlang der Achsrichtung des Vorformlings angeordnet sind und unter Verwendung von Zylindern oder dergleichen mit dem Behältnis in Kontakt gebracht werden. Dabei wird hier nur ein leichter Kontakt erreicht, der jedoch das Behältnis nicht verformt. Die EP 0 920 974 A2 beschreibt eine Vorrichtung zum Blasformen von nicht runden Behältnissen ausgehend von einem rotationssymetrischen Vorformling. Dabei weist diese Vorrichtung eine Dreheinrichtung auf, um die Vorformlinge um ihre eigene Achse zu drehen sowie einen Sensor, der eine Winkelposition jedes Vorformlings in einer Erwärmungsstation feststellt.

Aus DE 600 04 894 T2 ist eine Blasformmaschine für Behälter bekannt, die eine Vorrichtung zur Orientierung der Vorformlinge in einem Werkzeug enthält. Die EP 1 279 477 A1 beschreibt eine Vorrichtung und ein Verfahren zum Blasformen von einer Flasche. Dabei werden auch hier die Vorformlinge zwischen einem Heizschritt und einem Blasschritt innerhalb einer Blasform positioniert wobei ein Sensor profilierte Positionen jedes Vorformlings erkennt, so dass diese Bereiche in einer vorgegebenen Orientierung relativ bezüglich der Blasform angeordnet werden.

Die US 5, 101, 990 beschreibt ein Verfahren zum Blasformen von Behältnissen mit beispielsweise ovalen Querschnitten. Dabei werden in den Behältnissen radial nach innen gerichtete Rippen erzeugt. Beim einem aus der US 4,151, 249 bekannten Verfahren zum Herstellen von Kunststoffbehältnissen werden nach innen gewölbte Rippen erzeugt. Diese Rippen werden dabei durch berührungsfreies Abkühlen durch Luft in einzelnen Bereichen der Vorformlinge erzeugt.

Der vorliegenden Erfindung liegt daher die Aufgabe zu Grunde, ein neues Konzept zur Verfügung zu stellen, um die Vorformlinge mit einem in Umfangsrichtung variierenden Temperaturprofil zu versehen. Diese sind erfindungsgemäß durch eine Vorrichtung nach Anspruch 1 und ein Verfahren nach Anspruch 13 erreicht. Vorteilhafte Ausführungsformen und Weiterbildungen sind Gegenstand der Unteransprüche.

Eine erfindungsgemäße Anlage zur Herstellung von Kunststoffbehältnissen weist eine Vorrichtung zum Erwärmen von Kunststoffvorformlingen auf. Diese Vorrichtung zum Erwärmen von Kunststoffvorformlingen weist eine Transportvorrichtung auf, welche die Kunststoffvorformlinge entlang eines vorgegebenen Transportpfads transportiert und eine Heizeinrichtung, welche bevorzugt entlang dieses Transportpfades der Kunststoffvorformlinge angeordnet ist und welche die Kunststoffvorformlinge erwärmt.

Erfindungsgemäß weist die Vorrichtung eine erstes (insbesondere stromabwärts bezüglich der Heizeinrichtung angeordnetes) Kontaktierungselement zur Beaufschlagung einer Wandung des Kunststoffvorformlings mit einem sich in einer Umfangsrichtung des Kunststoffvorformlings ändernden Temperaturprofil auf, wobei dieses Kontaktierungselement mit einer Kontaktfläche einen vorgegebenen und bevorzugt in der Umfangsrichtung und/oder Längsrichtung des Kunststoffvorformlings begrenzten Bereich der Wandung des Kunststoffvorformlings berührt um diesen Bereich mit einem gegenüber den von dem Kontaktierungselement nicht berührten Bereichen unterschiedlichen Temperaturprofil zu beaufschlagen, und wobei die Anlage eine in der Transportrichtung der Kunststoffvorformlinge nachgeordnete Umformungseinrichtung zur Umformung von Kunststoffvorformlingen in Kunststoffbehältnisse aufweist und diese Umformungseinrichtung wenigstens eine temperierbare Blasform aufweist, innerhalb derer die Kunststoffvorformlinge zu den Kunststoffbehältnissen umformbar sind, wobei eine Temperatur der Kontaktfläche einstellbar veränderbar ist.

Vorteilhaft weist die Vorrichtung eine Zustelleinrichtung auf, welche das Kontaktierungselement in einer vorgegebenen Richtung auf den Kunststoffvorformling zustellt.

Unter einer Temperierbarkeit der Blasform wird verstanden, dass wenigstens ein Bereich dieser Blasform und insbesondere ein Wandungsbereich, den die Kunststoffvorformlinge während des Expansionsvorgangs berühren gegenüber einer Referenztemperatur temperiert werden kann, insbesondere erwärmt oder gekühlt werden kann.

Bei einer vorteilhaften Ausführungsform weist die temperierbare Blasform einen Kanal für ein fließfähiges Temperiermittel auf. Bei diesem Temperiermedium kann es sich beispielsweise um Öl oder auch Wasser handeln, welches bewirkt, dass die Blasform im Arbeitsbetrieb auf einem im Wesentlichen konstanten Temperaturniveau gehalten wird. Es wäre jedoch auch alternativ oder zusätzlich denkbar, dass derartige Kanäle in einem Formträger und/oder einer Mutterform angeordnet sind. Bei einer weiteren vorteilhaften Ausführungsform weist die Blasform zwei Blasformteile auf, die bezüglich einander um eine vorgegebene Achse schwenkbar sind, wobei diese Achse insbesondere senkrecht zu einem Transportpfad der Blasformen steht.

Bei einer weiteren vorteilhaften Ausführungsform ist die temperierbare Blasform elektrisch temperierbar. Dabei könnten beispielweise in einem Wandungsbereich der Blasform elektrisch betriebene Heizelemente (zum Erwärmen) oder ggfs. auch Peltierelemente oder dergleichen (zum Kühlen) vorgesehen sein. Auch wäre es möglich, dass die Temperierbarkeit durch eine Luftkühlung erreicht wird.

Unter einer Transportvorrichtung wird jegliche Einrichtung verstanden, welche die Kunststoffvorformlinge transportiert, hier beispielsweise an einem Träger oder einer Transportkette angeordnete Greifklammern, welche die Vorformlinge an einem Tragring greifen oder auch Dorne, welche in die Kunststoffvorformlinge bzw. deren Mündungen eingreifen.

Weiterhin findet über das Kontaktierungselement eine tatsächliche Berührung des Kunststoffvorformlings statt, was sich von den aus dem Stand der Technik bekannten Vorrichtungen unterscheidet. Üblicherweise wird im Stand der Technik eine Berührung des Kunststoffvorformlings vermieden, um diesen nicht vor dem eigentlichen Blasvorgang zu verformen. Bevorzugt kühlt das Kontaktierungselement den vorgegebenen Bereich des Kunststoffvorformlings.

Vorzugsweise wird das Kontaktierungselement zumindest auch in einer radialen Richtung bezüglich des Kunststoffvorformlings zugestellt. Dabei wäre es möglich, das zwei derartige Kontaktierungselemente in einer genau radialen Richtung auf den Kunststoffvorformling zugestellt werden, es könnte jedoch auch ein klammerartiger Mechanismus vorgesehen sein, der das Kontaktierungselement um einen vorgegebenen Schwenkpunkt bewegt, damit jedoch auch in einer radialen Richtung auf den Kunststoffvorformling zu bewegt.

Es wird damit ein neuartiges Konzept vorgestellt, um die Temperaturschichtung auf den Kunststoffvorformling aufzubringen. Dieses Konzept unterscheidet sich in mehrerlei Hinsicht von den bisherigen Verfahren, da die besagte Temperaturschichtung in Längsrichtung nicht über ein unterschiedliches Aufheizen sondern über eine gerichtete Abkühlung (in axialer und/oder horizontaler Richtung) erfolgt. Dabei werden die gewünschten Bereiche des Kunststoffvorformlings gezielt über einen Kontakt mit dem Kontaktierungselement, welches beispielsweise als temperierte Formplatte ausgeführt sein kann, gekühlt.

Vorteilhaft wird in einem Übergabestern eine Kühlstrecke, beispielsweise in Form eines KühlKanals durch Kühlsegmente aufgebaut. Durch die Strahlungskälte wird der Kunststoffvorformling (bevorzugt an seiner Außenseite) gekühlt und damit ein "Preferential Cooling" erzeugt. Dabei kann die Kühlwirkung auch über die Verweilzeit in dem Kühlkanal, die Maschinenleistung und Menge sowie die Länge der aktiven Kühlsegmente oder die Kühlleistung beeinflusst werden. Es wäre dabei abweichend von der vorliegenden Erfindung auch möglich, diese Kühlung über eine berührungslose Außenkühlung zu bewirken. Auch durch die Größe des besagten Übergabesterns kann die Kühlleistung bzw. Kühlzeit beeinflusst werden.

Bei einer weiteren bevorzugten Ausführungsform ist es möglich, dass mehrere Kanäle für ein fließfähiges Temperiermittel vorhanden sind, die mit den Kontaktierungselementen in (Wirk-)Verbindung stehen. Dadurch ist es möglich, die beiden Kontaktierungselemente mit unterschiedlichen Temperaturen zu beaufschlagen, um beispielsweise ein Kontaktierungselement mehr zu kühlen als das andere und so asymmetrische Behälter herstellen zu können. Weiterhin ist es damit möglich, verschiedene Teilbereiche eines Kontaktierungselements unterschiedlich zu temperieren. Eine andere bevorzugte Möglichkeit, diese Effekte zu erzielen, ist, dass die Kontaktierungselemente aus verschiedenen Materialien bestehen; die erste beispielsweise aus einem wärmeisolierenden (z.B. Teflon) und die zweite aus einem wärmeleitenden Material (Aluminium). Besonders bevorzugt können auf dem Kontaktierungselement Stege in Längs- und/oder Umfangsrichtung angebracht sein, um gezielt bestimmte Stellen des Preforms zu temperieren.

Auch wäre es möglich, dass ein Kontaktierungselement Bereiche aufweist, welche aus einem wärmeleitenden Material bestehen, um Wärme aus einem Wandungsteil des Vorformlings abzuführen sowie auch Bereiche, welche aus einem wärmeisolierenden Material bestehen, um einem Wandungsteil des Vorformlings Wärme zuzuführen.

Bei einer bevorzugten Ausführungsform ist die Größe des Bereichs, entlang dessen die Kontaktfläche den Kunststoffvorformling berührt, in Abhängigkeit von der geometrischen Form des herzustellenden Behältnisses gewählt. Genauer gesagt wurde in umfangreichen Studien ermittelt, dass die Größe dieses Bereichs besonders bevorzugt in Abhängigkeit von einem Seitenverhältnis zwischen den langen und kurzen Seiten der herzustellenden Flasche gewählt werden sollte. Dabei steigt besonders bevorzugt die genannte Berührfläche, d.h. die Größe des Bereichs mit einem größer werdenden Verhältnis zwischen den Seitenlängen des herzustellenden Behältnisses. So wurde beispielsweise festgestellt, dass bei einem Seitenverhältnis der fertigen Flasche, welches zwischen 1,2 :1 und 1,5:1 liegt, ein prozentualer Anteil der Berührfläche zwischen 10 % und 70 % bevorzugt zwischen 20 % und 60 % liegen sollte. Bei einem Seitenverhältnis zwischen 1,5:1 und 1,7:1 liegt die Berührfläche vorteilhaft zwischen 40 % und 80 % und besonders bevorzugt zwischen 50 % und 70 %.

Bei einem Seitenverhältnis, welches zwischen 1,7:1 und 2:1 liegt, liegt die besagte Berührfläche zwischen 50 % und 90 %, bevorzugt zwischen 60 % und 85 %. Dies bedeutet, dass jedenfalls bei größer werdenden Seitenverhältnisse auch der prozentuale Anteil der Berührfläche ansteigt.

Erfindungsgemäß ist die Temperatur der Kontaktfläche veränderbar. So ist es beispielsweise möglich, dass innerhalb des Kontaktierungselements Flüssigkeitskanäle angeordnet sind, durch welche eine Kühlflüssigkeit geleitet werden kann. Auch wären andere Vorgehensweisen wie beispielsweise Peltier - Elemente denkbar, um die Kontaktmittel beziehungsweise die Kontaktfläche abzukühlen. Der erwähnte Kühleffekt kann damit über den mechanisch bedingten Berührflächen und über eine einstellbare Plattentemperatur beziehungsweise Temperatur der Kontaktflächen geregelt werden. Auch wäre es möglich, dass die Kontaktierungselemente bestimmte Bereiche des Vorformlings zusätzlich erwärmen, damit diese besser verstreckt werden können.

Bei einer weiteren vorteilhaften Ausführungsform kontaktiert das Kontaktierungselement eine Außenwandung der Kunststoffvorformlinge. Es wäre jedoch auch möglich, dass insbesondere bei Behältnissen mit größerem Querschnitt das Kontaktierungselement an eine Innenwand der Kunststoffvorformlinge angelegt wird. Bevorzugt ist jedoch die Kontaktierung der Außenwandungen der Kunststoffvorformlinge.

Bei einer weiteren vorteilhaften Ausführungsform bewirkt das Kontaktierungselement wenigstens zeitweise eine Verformung des Kunststoffbehältnisses. Bei dieser Ausführungsform wird bewusst eine mindest leichte Quetschung des Kunststoffvorformlings gewünscht. Auf diese Weise kann ein flächiger Kontakt zwischen dem Kunststoffvorformling und dem Kontaktierungselement sicher gestellt werden. So ist es beispielsweise möglich, dass zwei Kontaktierungselemente vorgesehen sind und ein minimaler Abstand dieser beiden Kontaktierungselemente geringer ist als ein Außenradius des Kunststoffbehältnisses. Vorteilhaft ist ein Anpressdruck des Kontaktierungselements gegenüber dem Kunststoffvorformling veränderbar. Diese Veränderbarkeit beziehungsweise Einstellbarkeit des Anpressdruckes führt dazu, dass auch mit einer definierten Quetschung des Kunststoffvorformlings gearbeitet werden kann.

Vorzugsweise weist die Vorrichtung ein zweites Kontaktierungselement auf, welches einen zweiten und in der Umfangsrichtung des Kunststoffvorformlings begrenzten Bereich der Wandung des Kunststoffvorformlings kontaktiert. Dabei ist es möglich, dass sich diese beiden Kontaktierungselemente bezüglich des Kunststoffvorformlings gegenüberstehen und diesen in einem geschlossenen Zustand zwischen sich einklemmen.

Bei einer besonders bevorzugten Ausführungsform weist die Vorrichtung eine Klammervorrichtung auf, welche die Kontaktierungselemente enthält und die Kontaktflächen auf den Kunststoffvorformling zustellt. Diese Klammereinrichtung, welche beispielsweise über Führungskurven betätigt werden kann stellt eine besonders günstige Ausführungsform dar, um den Kunststoffvorformling an vorbestimmten Positionen zu kühlen. Bevorzugt kann dabei eine Vielzahl derartiger Klammereinrichtungen auf einem Trägerrad angeordnet sein und an diese Klammereinrichtungen werden die Kunststoffvorformlinge übergeben. Dabei ist es möglich, dass auf dem Trägerrad eine Halteeinrichtung vorgesehen ist, welche beispielsweise die Kunststoffvorformlinge an deren Mündungen greift und zusätzlich in der Längsrichtung der Kunststoffvorformlinge versetzt hierzu die einzelnen Klammereinrichtungen, welche eine Kühlung der Wandung der Kunststoffvorformlinge und insbesondere der Außenwandungen bewirken.

Bevorzugt ist wenigstens ein Kontaktierungselement um eine vorgegebene Schwenkachse schwenkbar. Besonders bevorzugt sind beide Kontaktierungselemente jeweils um vorgegebene Schwenkachsen schwenkbar, wobei diese Schwenkachsen nicht zusammenfallen und besonders vorteilhaft parallel nebeneinander sind. Die Schwenkachsen können jedoch auch zusammenfallen. Vorteilhaft ist eine Vielzahl derartiger Klammereinrichtungen auf einem drehbaren Träger angeordnet.

Bei einer weiteren vorteilhaften Ausführungsform weist die Vorrichtung ein Kontaktierungselement in Form eines Bodenelements auf, welches den Boden des Kunststoffvorformlings zu dessen Temperierung kontaktiert und diesen insbesondere ebenfalls kühlt. Auf diese Weise kann eine gezielte Ausprägung eines Bodenabschnitts des fertigen Behältnisses erreicht werden. Dieses Bodenelement ist dabei bevorzugt auch zum Blasen von sogenannten Petaloidböden geeignet. Die Bewegung des Bodenelements kann dabei an eine Bewegung der oben genannten Kontaktierungselemente gekoppelt sein. Auch wäre es möglich, dass ein derartiges Bodenelement durch eine separate Ansteuerung beispielsweise von unten mittels einer Kurve oder eines Elektromotors und/oder eines pneumatischen oder hydraulischen Antriebs auf den Kunststoffvorformling zugestellt wird. Es wird darauf hingewiesen, dass dieses Bodenelement auch unabhängig von den oben erwähnten Kontaktierungselementen eingesetzt werden kann, dass also insbesondere nur eine Temperierung bzw. Kühlung des Bodenbereichs des Kunststoffvorformlings vorgenommen wird. In diesem Fall kann dieses Kontaktierungselement auch umlaufend ausgebildet sein, so dass der Kontaktbereich nur in der Längsrichtung begrenzt ist.

Weiterhin wäre es auch möglich, dass eine Klammereinrichtung einerseits die Kontaktierungselemente aufweist, andererseits jedoch an diesen Kontaktierelementen auch Bodenabschnitte angeordnet sind, welche einen Boden der Kunststoffvorformlinge kontaktieren. So könnte beispielsweise in den Böden aller Klammereinrichtungen ein Ring angeordnet sein. Dieser Ring könnte später zur Stabilisierung des Bodens dienen und auch bei dem fertig hergestellten Behältnis als sogenannter Aufstellring wieder zu finden sein, der einen Bereich mit einer größeren Wandstärke definiert.

Weiterhin könnte eine Klammereinrichtung mehrteilig ausgebildet sein, d.h. in Längsrichtung des Kunststoffvorformlings könnten mehrere Kontaktierungselemente übereinander angeordnet sein.

Bei einer weiteren vorteilhaften Ausführungsform ist die Kontaktfläche der Kontaktierungselemente gekrümmt. Genauer gesagt kann diese Kontaktfläche individuell gestaltet sein. Bei einer Ausführungsform weist sie den gleichen Radius auf, wie der Kunststoffvorformling an seiner Außenoberfläche. Es wäre jedoch auch möglich, dass der Krümmungsradius der Kontaktfläche geringfügig größer ist als der Krümmungsradius des Kunststoffvorformlings, damit sich im Falle einer gewissen Quetschung die Wandung des Kunststoffvorformlings einfacher an den nunmehr vergrößerten Krümmungsradius der Kontaktfläche anlegen kann.

Bei einer weiteren vorteilhaften Ausführungsform weist die Vorrichtung ein der Heizeinrichtung auf dem Transportpfad der Behältnisse nachgeschaltetes Kühlmodul auf und die Kontaktierungselemente sind Bestandteil dieses Kühlmoduls. Dies bedeutet, dass hier zunächst die Behältnisse aufgeheizt werden und dann an vorgegebenen Positionen gekühlt werden. Dabei sind die Kontaktierungselemente bevorzugt Bestandteil dieses Kühlmoduls. So wäre es möglich, dass die Behältnisse zunächst aufgeheizt werden und dann beispielsweise in einer Vielzahl von auf einem Trägerrad angeordneten Transporteinrichtung transportiert werden und während dieses Transports an vorbestimmten Positionen gekühlt werden.
Die Kontaktierungselemente können auch derart ausgebildet sein, dass sie zusätzliche Stege in den Behältnissen erzeugen, die nicht in der (nachfolgenden) Blasform enthalten sind.

Bei einer weiteren vorteilhaften Ausführungsform ist dabei auch eine Ausrichteinrichtung vorgesehen, welche eine Drehstellung der Kunststoffvorformlinge bzgl. ihrer Längsrichtung auf eine vorbestimmte Position hin ausrichtet. Dies ist insbesondere bei solchen Behältnissen interessant, welche nicht nur eine ovale Gestalt aufweisen, sondern bei denen auch ein Schraubverschluss an einer genau definierten Drehposition anzufinden ist. Darüber hinaus ist es vorteilhaft, die Behältnisse in eine definierte Drehposition zu bringen, um gezielt Stege anbringen zu können. In diesem Falle müssen die Kunststoffvorformlinge vor dem eigentlichen Kühlen in eine bestimmte Drehposition in einer Längsrichtung ausgerichtet werden. Eine derartige Ausrichteinrichtung kann dabei ein Sensorelement aufweisen, welches bestimmte Positionen der Mündung beziehungsweise eines Gewindes erkennt und den Kunststoffvorformling auf diese Positionen ausrichtet.

Die vorliegende Erfindung ist weiterhin auf ein Verfahren zum Erwärmen beziehungsweise Temperieren von Kunststoffvorformlingen gerichtet, wobei diese Kunststoffvorformlinge entlang einer vorgegebenen Transportstrecke transportiert und mittels einer Heizeinrichtung erwärmt werden. Erfindungsgemäß wird in einer Umfangsrichtung und/oder Längsrichtung der Kunststoffvorformlinge ein ungleichmäßiges Temperaturprofil aufgebracht, indem wenigstens ein erstes Kontaktierungselement auf den Kunststoffvorformling zugestellt wird und mit einer Kontaktfläche einen vorgegebenen und in der Umfangsrichtung und/oder Längsrichtung des Kunststoffvorformlings begrenzten Bereich einer Wandung des Kunststoffvorformlings kontaktiert, um diesen Bereich mit einem gegenüber von dem Kontaktierungselement nicht berührten Bereichen unterschiedlichen Temperaturprofil zu beaufschlagen und insbesondere zu kühlen. Weiterhin werden anschließend die Kunststoffvorformlinge mittels einer wenigstens abschnittsweise temperierten Blasform zu Kunststoffbehältnissen umgeformt und wobei eine Temperatur der Kontaktfläche einstellbar veränderbar ist. Damit wird auch hier verfahrensseitig vorgeschlagen, dass die Kunststoffvorformlinge an einer Wandung und insbesondere an einer Außenwandung kontaktiert werden und an diesen entsprechenden Stellen nicht, wie im Stand der Technik teilweise üblich, erwärmt sondern gekühlt werden. Vorteilhaft werden die Kunststoffvorformlinge zunächst in ihrer Gesamtheit und bevorzugt gleichmäßig erwärmt und anschließend partiell abgekühlt. Vorzugsweise kühlt die Kontaktfläche den begrenzten Bereich des Kunststoffvorformlings.

Die Offenbarung ist weiterhin auf ein Kunststoffbehältnis gerichtet und insbesondere ein Kunststoffbehältnis, welches mit dem oben beschriebenen Verfahren herstellbar ist. Dieses Kunststoffbehältnis weist dabei einen Grundkörper und einen einteilig mit diesem Grundkörper ausgebildeten Gewindeabschnitt auf. Der Grundkörper weist erste Wandungsabschnitte mit einer ersten vorgegebenen Wanddicke und zweite Wandungsabschnitte mit einer zweiten vorgegebenen Wanddicke auf, wobei die erste und die zweite Wanddicke voneinander abweichen.

Vorzugsweise sind zwischen den Wandungsabschnitten mit der ersten Wanddicke und den Wandungsabschnitten mit der zweiten Wanddicke Übergangsabschnitte vorgesehen, in denen die Wanddicken insbesondere kontinuierlich ineinander übergehen. Vorteilhaft gehen die Wanddicken nicht sprunghaft bzw. stufenartig ineinander über.

Vorzugsweise handelt es sich bei dem Behältnis um ein PET, PP oder HDPE - Behältnis. Bei einer weiteren vorteilhaften Ausführungsform handelt es sich bei dem Behältnis um ein mit einer warmen Flüssigkeit abfüllbares Behältnis. Unter einer warmen Flüssigkeit wird dabei eine Flüssigkeit verstanden, die mit einer Temperatur von mehr als 30°, bevorzugt von mehr als 40° und besonders bevorzugt von mehr als 50° in das Behältnis abgefüllt wird. Vorteilhaft weist das Material des Kunststoffbehältnisses einen kristallinen Anteil auf, der zwischen 25% und 40%, bevorzugt zwischen 28% und 34% liegt.

Bei einer weiteren vorteilhaften Ausführungsform erstreckt sich ein Wandungsabschnitt mit höherer Wanddicke in einer Längsrichtung des Kunststoffbehältnisses. Bei einer weiteren vorteilhaften Ausführungsform weist das Behältnis mehrere sich in einer Längsrichtung des Behältnis erstreckende Wandungsabschnitte mit höherer Wanddicke auf, wobei diese Wandungsabschnitte vorteilhaft zueinander beabstandet sind und besonders bevorzugt gleichmäßig voneinander beabstandet sind. Diese Wandungsabschnitte mit höherer Wanddicke können dabei als Stege oder Kanten ausgeführt sein, welche eine Stegbreite aufweisen, welche zwischen 2mm und 35mm, bevorzugt zwischen 4mm und 30mm und besonders bevorzugt zwischen 4mm und 20mm liegt. Diese Stege können sich dabei entlang der Gesamten Länge des Behältnisses erstrecken oder auch nur in Abschnitten.

Bei einer weiteren bevorzugten Ausführungsform ist wenigstens ein Wandungsabschnitt mit einer höheren Wanddicke eben bzw. in einer Umfangsrichtung des Behältnisses nicht gekrümmt.

Bei Kunststoffbehältnissen und insbesondere PET-Flaschen kann die Wandstärke für unterschiedliche Eigenschaften von Bedeutung sein. Eine höhere Wandstärke kann z.B. mehr Widerstandskraft gegen Innendruck bieten oder die Flasche vor Ovalität schützen. Vorteilhaft wird demnach gezielt mehr Material in vorgegebenen Bereichen der Behältniswandung konzentriert, um so die Wandungsstärke zu erhöhen. Die Anforderungen an die Behältnisse unterscheiden sich jedoch je nach der Prozessart für die Abfüllung der Behältnisse (Standard / Hotfill / Nitro - Hotfill).

Bei einer weiteren Ausführungsform ist ein Wandungsabschnitt mit einer höheren Wanddicke ringförmig ausgebildet, erstreckt sich also in der Umfangsrichtung der Behältniswandung. Dabei kann diese ringförmige Ausbildung horizontal oder auch schräg verlaufen. Bevorzugt liegt ein Durchmesserunterschied zwischen 0% und 60%, bevorzugt zwischen 0% und 40% bezogen auf den Außendurchmesser des Behältnisses. Bei einer weiteren vorteilhaften Ausführungsform weist der besagte Abschnitt mit der höheren Wanddicke eine Gesamthöhe (gegenüber dem übrigen Außenumfang des Behältnisses) auf, der zwischen 3mm und 100m, bevorzugt zwischen 5mm und 80mm und besonders bevorzugt zwischen 5mm und 40mm liegt.

Vorzugsweise weist das Behältnis einen Behältnisboden auf, der ebenfalls vorteilhaft einteilig mit dem Grundkörper ausgebildet ist. Auch in diesem Behältnisboden können Bereiche mit einer erhöhten Wanddicke vorgesehen sein. So kann der Behältnisboden beispielsweise sog. Zugbänder mit höherer Wanddicke aufweisen.

Weitere vorteilhafte Ausführungsformen ergeben sich aus den beigefügten Zeichnungen.

Darin zeigen:
- Fig. 1: Eine Übersichtsdarstellung einer Vorrichtung zum Umformen von Kunststoffvorformlingen ;
- Fig. 2a - 2b: zwei schematische Darstellungen einer erfindungsgemäßen Vorrichtung;
- Fig. 3a: ein Modul zum bereichsweise Kühlen der Kunststoffvorformlinge;
- Fig. 3b: das Modul aus Fig. 3a bei abgenommenem Gehäuse;
- Fig. 4a - 4c: drei Darstellungen einer Kontaktierungseinheit;
- Fig. 5a - 5c: drei Darstellungen eines Kontaktierungselements;
- Fig. 6a - 6b: zwei Darstellungen zur Veranschaulichung der Kontaktierung;
- Fig. 7a - 7c: drei weitere mögliche Darstellungen zur Veranschaulichung einer Kontaktierung des Kunststoffvorformlings;
- Fig. 8a - 8b: zwei Darstellungen der Kontaktierung eines Bodenbereichs eines Kunststoffvorformlings;
- Fig. 9: eine Darstellung zur Veranschaulichung eines Bodens eines Behältnisses;
- Fig. 10a - 10c: drei Darstellungen von hergestellten Behältnissen;
- Fig. 11a - 11c: drei weitere Darstellungen eines hergestellten Kunststoffbehältnisses;
- Fig. 12a - 12c: drei weitere Darstellungen eines hergestellten Kunststoffbehältnisses.
- Fig. 13a - 13b: zwei teilweise Darstellungen eines Wandungsbereichs eines Kunststoffbehältnisses
- Fig. 14a - 14c: drei Schnittdarstellungen von hergestellten Kunststoffbehältnissen, und;
- Fig. 15a - 15b: zwei Darstellungen von Böden von hergestellten Kunststoffbehältnissen.

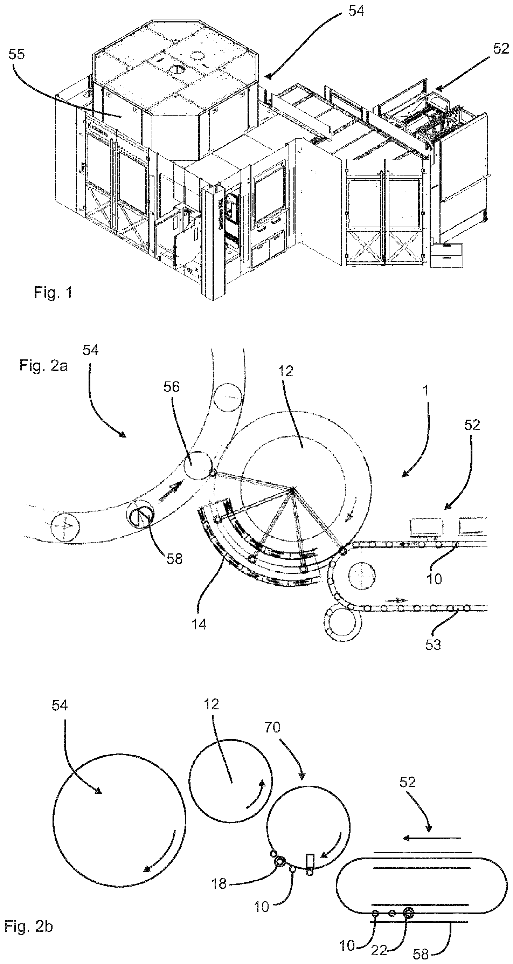

Figur 1 zeigt eine schematische Darstellung einer Vorrichtung zum Umformen von Kunststoffvorformlingen. Dabei bezieht sich dieses Bezugszeichen 54 auf die eigentliche Blasformeinheit, wie beispielsweise eine Blasformmaschine und das Bezugszeichen 55 auf ein Gehäuse. Das Bezugszeichen 52 kennzeichnet in seiner Gesamtheit eine Heizeinrichtung, welche die Kunststoffvorformlinge erwärmt.

Die Figuren 2a und 2b zeigt eine schematische Darstellung einer erfindungsgemäßen Vorrichtung. Dabei ist auch hier wieder die Heizeinrichtung 52 vorgesehen, durch welche die Kunststoffvorformlinge 10 mit Hilfe eines Transportmittels, hier einer Transportkette 53, hindurch gefördert und einheitlich (mit Ausnahme des Gewindebereichs) erwärmt werden. An diese Heizeinrichtung 52 schließt sich ein Trägerrad 12 an, welches die Kunststoffvorformlinge 10 übernimmt und durch eine (nur schematisch dargestellte) Kühlstrecke 14 transportiert, entlang derer die Kunststoffvorformlinge bereichsweise gekühlt werden. An diese Kühlstrecke schließt sich die Blasformeinheit 54 auf, welche eine Vielzahl von Blasstationen 56 aufweist, in denen die Kunststoffvorformlinge zu Kunststoffbehältnissen expandiert werden. Die Heizeinrichtung 52 und die Kühlstrecke 14 bilden gemeinsam die erfindungsgemäße Vorrichtung 1. Das Bezugszeichen 40 kennzeichnet die erfindungsgemäße Anlage in ihrer Gesamtheit.

Das Bezugszeichen 58 in Fig. 2a bezieht sich auf eine Blasform, innerhalb derer die Kunststoffvorformlinge zu Kunststoffbehältnissen expandiert werden. Dabei können, wie im Stand der Technik bekannt, zwei Formhälften vorgesehen sein, die bezüglich einander beweglich sind, um so Kunststoffvorformlinge aufnehmen und gefertigte Behältnisse ausgeben zu können. Die gezeigte Blasform ist, wie oben erwähnt, temperierbar.

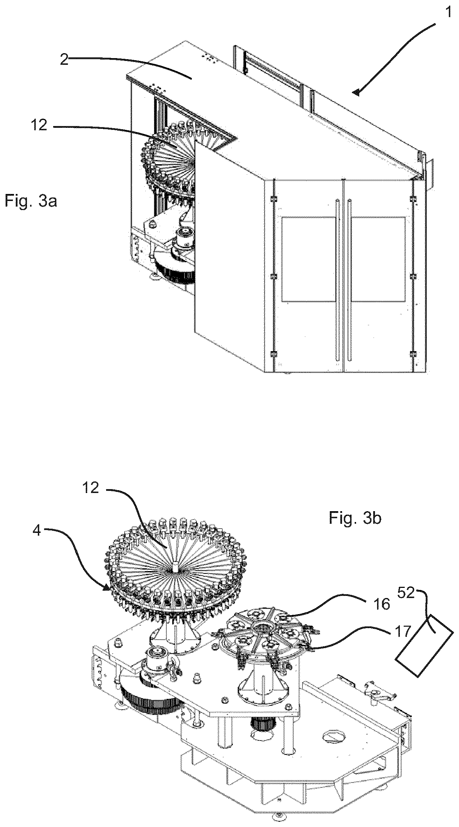

Die Figuren 3a und 3b zeigen eine erfindungsgemäße Vorrichtung 1. Dabei ist bei der in Figur 2 gezeigten Darstellung ein Gehäuse 2 gezeigt, welches bei der in Figur 3 gezeigten Darstellung zur besseren Übersichtlichkeit entfernt wurde. Diese Vorrichtung weist ein Trägerrad 12 auf, an dem eine Vielzahl von Kontaktierungselementen 4 vorgesehen ist, die sich damit entlang einer kreisförmigen Linie bewegen.

Das Bezugszeichen 16 kennzeichnet einen Zuführstern, der die Vorformlinge dem Trägerrad 12, d.h. den einzelnen Kontaktierungselementen 4 zuführt. An diesem Zubehörstern 16 ist ebenfalls eine Vielzahl von Greifelementen 17, wie Greifklammern, angeordnet. Stromaufwärts bezüglich dieses Übergabesterns 16 kann eine nur schematisch dargestellte Heizeinrichtung 52 vorgesehen sein, die beispielsweise als Durchlaufofen ausgeführt ist, durch den die Vorformlinge hindurch geführt werden. Die Drehbewegungen des Zuführsterns 16 und des Trägers 12 können dabei beispielsweise mittels Getrieben aufeinander synchronisiert sein. Es wäre jedoch auch möglich, das jeweils geregelte Antriebsmotoren zum Antrieb dieser beiden Einrichtungen vorgesehen sind. Das Trägerrad 12 ist Bestandteil der Transporteinrichtung zum Transportieren der Kunststoffvorformlinge.

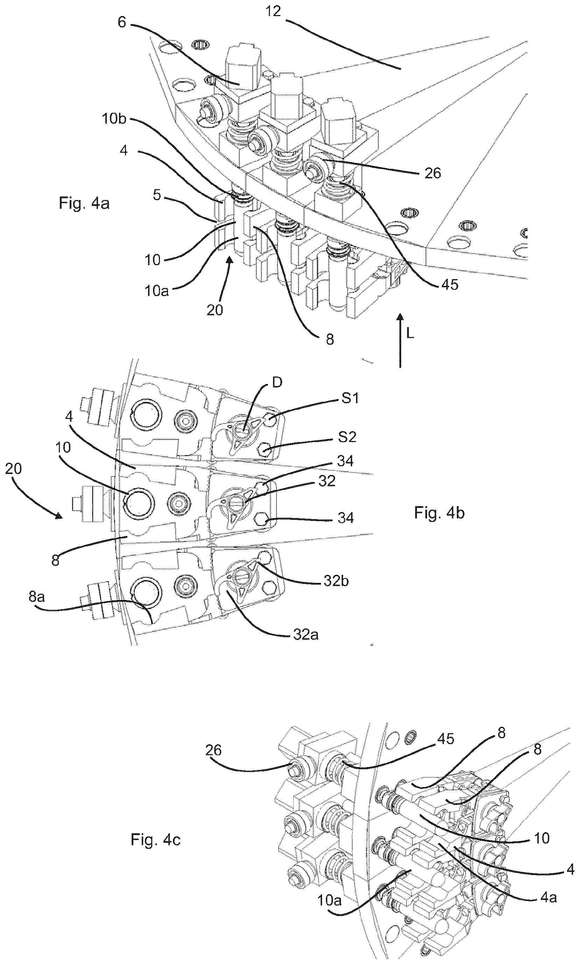

Figur 4a zeigt eine Detaildarstellung des Trägers 12, an dem eine Vielzahl von Kontaktierungseinrichtungen 20 (hier nur drei gezeigt) angeordnet sind. Diese Kontaktierungseinrichtungen, 20, genauer, deren Kontaktierungselemente, kontaktieren dabei jeweils die Kunststoffvorformlinge 10 in einem Körperbereich 10a. Ein Gewinde 10b der Kunststoffvorformlinge wird dabei vorzugsweise nicht berührt. Das Bezugszeichen 6 bezieht sich auf eine optional vorhandene Ausrichteinrichtung, wie beispielsweise einen Drehantrieb, der die Kunststoffvorformlinge 10 um deren Längsachse dreht. Mittels einer Kurvenrolle 26 kann der Kunststoffvorformling entlang seiner Längsrichtung L verschoben und mittels einer Federungseinrichtung 45 vorgespannt werden.

Die einzelnen Kontaktierungseinrichtungen 20 weisen jeweils zwei Kontaktierungselemente 4, 8 auf, welche den Kunststoffvorformling hier von zwei Seiten her berühren, um ihn zu kühlen. Die Kontaktierungseinrichtungen 20 stellen damit auch die eingangs erwähnten Zustelleinrichtungen dar, welche die Kontaktierungselemente auf den Kunststoffvorformling zustellen. In der in den Figuren dargestellten Ausführungsform sind die Kontaktierungseinrichtungen 20 jeweils als Klammereinrichtungen ausgeführt.

Die Kontaktierungskörper 4 beziehungsweise 8 sind hier zweiteilig ausgebildet, d.h. sie weisen einen Spalt 5 zwischen sich auf. Vorzugsweise sind die einzelnen Kontaktierungskörper 4 temperierbar und insbesondere in Figur 4a auch die oberen und unteren Kontaktierungselemente 4 beziehungsweise 8 unterschiedlich temperierbar. So wäre es beispielsweise möglich, dass das untere Kontaktierungselement kühler gehalten wird als das obere Kontaktierungselement. Daneben könnten auch bestimmte Bereiche der Kontaktierungselemente unterschiedlich temperiert werden. Zudem ist es ebenso denkbar, dass auch die beiden gegenüberliegenden Kontaktierungselemente 4 beziehungsweise 8 unterschiedliche Temperaturen aufweisen, um asymmetrische Behälter herstellen zu können.

Weiterhin wäre es möglich, dass die Innenflächen der Kontaktierungselementen 4, 8 austauschbar ausgebildet sind. In einer entsprechenden Halterung beziehungsweise einem Außenteil der Kontaktierkörper können beispielsweise Temperierbohrungen oder auch Heizelemente angebracht sein. Die Wärme dieser Heizelemente kann dabei durch den Kontakt zwischen dem Außenteil und dem eigentlichen Kontaktierungselement übertragen werden. Mittels der Aussparung 5 kann auch der Kontaktierkörper 4, 8 an dessen jeweiligem Träger angeordnet werden.

Figur 4b zeigt eine Draufsicht von unten auf die auch in Figur 4a gezeigte Klammereinrichtung 20. Dabei ist ein Schalthebel beziehungsweise Schaltnocken 32 zu erkennen, der eine vordere Ausnehmung 32a und eine hintere Anschlagfläche 32b aufweist. Mittels dieser beiden Anschlagflächen kann der Schaltnocken 32 um seine Drehachse D geschwenkt werden, wobei hierzu beispielsweise entsprechende (feststehende) Führungskurven einsetzbar sind. Durch ein Schwenken dieses Schaltnockens 32 wird ein Öffnen beziehungsweise Schließen der Klammereinrichtung 20 beziehungsweise ein aufeinander zu und voneinander wegbewegen der Kontaktierungselemente 4, 8 erreicht. Die Ausnehmung 32a des Schaltnockens 32, die hier halbmondförmig ausgebildet ist, ist für sehr große Schaltwinkel vorgesehen. Auf diese Weise kann ein feststehender Steuerbolzen (nicht gezeigt), der in die Nocke eingreift, diese Nocke 32 viel weiter drehen. Die Schwenkachsen S1 und S2 der beiden Kontaktierungselemente 4. 8 sind hier in dem Bereich der Sechskantschrauben 34 vorgesehen.

Figur 4c zeigt eine Seitendarstellung der in Figur 4a gezeigten Anordnung. Man erkennt auch hier wieder die Kontaktierungselemente 8 und 4, die sich an die Außenwandung 10a der Vorformlinge anlegen. Bei der in den Figuren 4a bis 4c gezeigten Ausführungsform legen sich die Kontaktierungselemente 4, 8 mit ihren Kontaktflächen 4a, 8a flächig an die Vorformlinge an. Hiervon abweichend oder zusätzlich können die Kontaktierungselemente jedoch auch den Vorformling derart kontaktieren beziehungsweise quetschen, dass zusätzliche Stege in diesen eingebracht werden, die nicht in der Blasform enthalten sind. Bei diesen Stegen kann es sich beispielsweise um in Längsrichtung des Vorformlings verlaufende Stege aber auch um horizontale oder schräg verlaufende oder gekrümmte Stege handeln. Bei diesen Stegen kann es sich wahlweise um dreieckige, rechteckige oder runde bzw. ovale Flächenbereiche handeln. Auf diese Weise können sehr leichte Flaschen produziert werden, ohne dass hierzu eine Rillengeometrie zur Stabilisierung benötigt wird.

Eine Versteifung erfolgt hier über eine unterschiedliche Materialverteilung und nicht über Flaschendesign-Elemente. Die Anbringung derartiger Stege ist sowohl bei runden als auch bei nicht runden Behältern möglich. Weiterhin wäre es auch möglich, Querrippen in der Art eines Pinches (ein beispielsweise umlaufender Ring in dem Körper des Behältnisses) anzubringen oder auch Längsrippen vorzusehen, welche die Belastbarkeit in Längsrichtung des Behältnisses erhöhen.

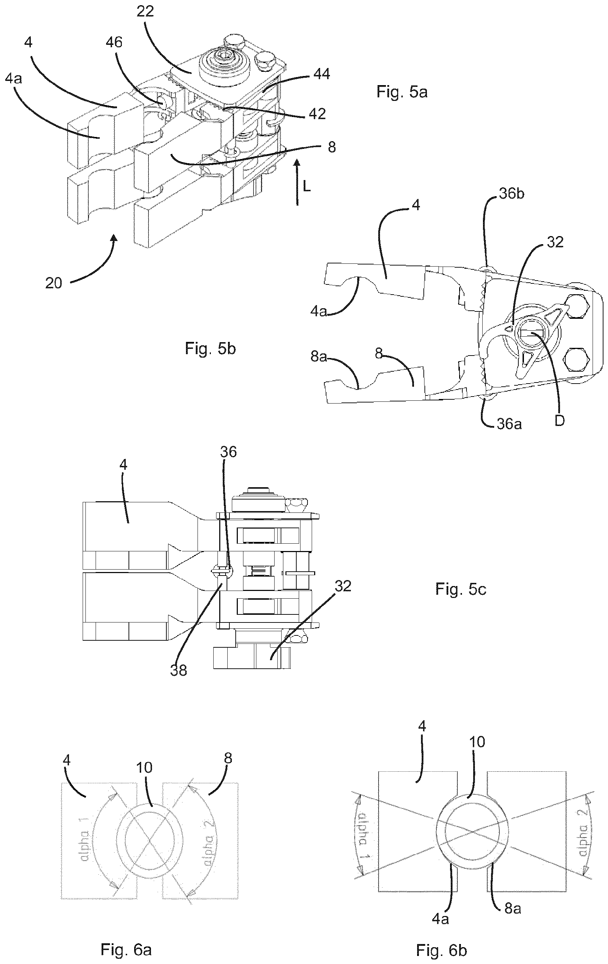

Figur 5a zeigt eine einzelne Klammereinrichtung 20. Dabei erkennt man, dass die beiden Kontaktierungselemente 4 und 8 über eine Verbindungsstelle 42 an jeweiligen Trägern 44 angeordnet sind. Genauer sind diese Kontaktierungselemente in der Längsrichtung L jeweils herausziehbar und können so durch andere Kontaktierungselemente ersetzt werden. Das Bezugszeichen 46 bezieht sich auf eine Befestigungseinrichtung wie eine Schraube, um die Kontaktierungselemente an den jeweiligen schwenkbaren Trägern 44 anzuschrauben.

Figur 5b zeigt eine Draufsicht von unten auf eine Klammereinrichtung 20. Wie erwähnt, kann hierbei der Schaltnocken 32 um seine Achse D geschwenkt beziehungsweise gedreht werden. Im Inneren der Klammereinrichtung und insbesondere zwischen den beiden Kontaktierungselementen 4 und 8 ist ein weiterer (nicht gezeigter) Schaltnocken vorgesehen. Dieser Teil, der zwischen den Kontaktierungselementen sitzt, ist oval beziehungsweise wie eine Passfeder ausgeprägt. Wenn er quer steht, bleibt die Klammereinrichtung 20 offen, d.h. die beiden Kontaktierungselemente 4 und 8, und damit auch die entsprechenden Kontaktflächen 4a und 8a weisen den maximalen Abstand zueinander auf. Wenn der besagte Nocken über einen gewissen Todpunkt gedreht wird, bleibt die Klammereinrichtung 20 offen. Um die Klammer wieder zu schließen, wird der Nocken wieder über den Todpunkt zurück gedreht und die beiden Kontaktierungselemente schließen automatisch. Zum Schließen dieser Kontaktierungselemente ist eine Federeinrichtung vorgesehen, von der hier jedoch lediglich zwei Federbügel 36a und 36b erkennbar sind, welche die beiden Kontaktierungselemente 4 und 8 über eine Spannkraft zusammen drücken. Ein Bereich an den Klammerenden ist vorzugsweise federnd ausgeführt, so dass der Totpunkt übergangen werden kann.

Figur 5c zeigt eine Seitendarstellung der Klammereinrichtung 20. Man erkennt hier wiederum die Federeinrichtung 36, welche die beiden Kontaktierungselemente 4 und 8 zusammen zieht. Dabei können die beiden Kontaktierungselemente 4 und 8 über einen Quersteg 38 miteinander verbunden sein, so dass deren Bewegungen aneinander gekoppelt sind.

Die Figuren 6a und 6b zeigen zwei Darstellungen zur Veranschaulichung eines Kontaktierungsvorganges des Vorformlings. Bei der in Figur 4a gezeigten Darstellung findet eine etwas stärkere Quetschung des Vorformlings statt, als bei der in Figur 6b gezeigten Darstellung. Die Berührfläche zwischen den Kontaktierungselementen und dem Kunststoffvorformling 10 kann auf unterschiedliche Weise beeinflusst werden. So ist es möglich, dass wie in Figur 6a gezeigt, die Kontaktfläche 4a genau auf den Vorformling 10 angepasst ist, oder, wie in Figur 6b gezeigt mit unterschiedlichen Quetschwegen auf den gewünschten Umschlingungswinkel eingestellt wird.

Bevorzugt wird eine Kombination aus den beiden in Figur 6a und 6b gezeigten Varianten gewählt, d.h. es wird vorzugsweise eine Grobeinstellung über eine Formgebung der Kontaktflächen vorgegeben und ein Feinjustieren erfolgt über einen Quetschweg. Man erkennt, dass auch bei der in Figur 6b gezeigten Darstellung eine zumindest geringfügige Verformung des Vorformlings auftritt. Vorzugsweise tritt eine Quetschung des Kunststoffvorformlings auf, die zwischen 0,05mm und 0,8mm, bevorzugt zwischen 0,1mm und 0,4mm im Radius beträgt.

Vorzugsweise werden diejenigen Flächen des Kunststoffvorformlings 10a, der von den Kontaktflächen 4a und 8a berührt wird, gleichzeitig gekühlt. Es wird jedoch erwähnt, dass auch im Wege einer inversen Vorgehensweise eine Aufwärmung dieses Bereichs vorgenommen wird.

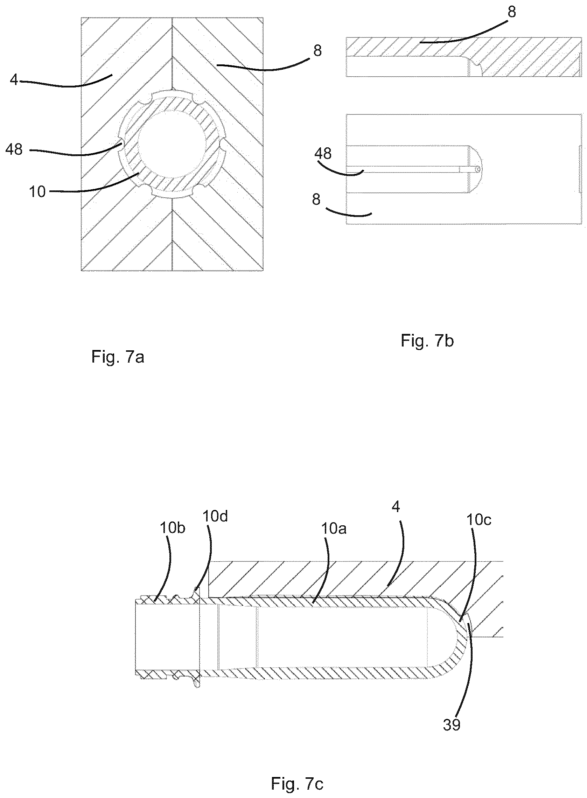

Die Figuren 7a - 7c zeigen drei weitere Darstellungen, um verstärkte Bereiche in den Vorformling einzubringen. Bei der in Figur 7a gezeigten Darstellung sind zwei Kontaktierungselemente 4, 8 dargestellt, die jeweils langgestreckte Vorsprünge 48 aufweisen, welche in den Außenumfang bzw. die Außenwandung des Kunststoffvorformlings 10 in einem geschlossenen Zustand hineinragen. Damit wird auch hier eine zumindest lokale Quetschung des Vorformlings bewirkt.

Auf diese Weise können Längsrippen (insbesondere in Form von Materialanhäufungen) des Kunststoffvorformlings erzeugt werden. In Figur 7b sind zwei Darstellungen eines auch in Figur 7a gezeigten Kontaktierungselementes 8 gezeigt. Hier erkennt man insbesondere auch die Längsrippe 48, die hier kurz vor der Position des Anspritzpunktes (nicht gezeigt) eines Kunststoffbehältnisses endet.

Diese Rippe 48 ragt hier auf jedem Fall in den Boden des Kunststoffvorformlings hinein. Auch ist hier dargestellt, dass das Kontaktierungselement auch vollständig um den Boden des Vorformlings schließt, so dass auch dieser gegebenenfalls gekühlt werden kann. Das Bodenteil ist hier also in den seitlich zuzustellenden Kontaktierungselementen enthalten. Grundsätzlich ist es möglich, dass die Klammereinrichtung 20 mit beliebig vielen seitlich zustellbaren Kontaktierungselementen arbeiten kann und zusätzlich ein ggfs. auch mehrteiliges Bodenteil (beispielsweise zum Blasen von Petaloidböden) aufweisen kann. Diese mehreren Kontaktierungselemente können dabei auch unabhängig voneinander zustellbar bzw. bewegbar sein.

Wie erwähnt, können in dem Kontaktierungselement Kühlmittelkanäle angeordnet sein, welche einen Kühlmitteldurchfluss durch die Kontaktierungselemente 4, 8 erlauben. Figur 7c zeigt eine weitere Darstellung, in der auch ein Kunststoffvorformling dargestellt ist. Bei der in den Figuren 7a bis 7c gezeigten Darstellung berührt das Kontaktierungselement lediglich den Körperbereich 10a des Kunststoffvorformlings 10. Zusätzlich wäre es jedoch auch möglich, dass ein Bereich des Kontaktierungselements, insbesondere wenn dieses zum Kühlen dient, auch an einem Gewindebereich beziehungsweise Halsbereich (Tragring plus Gewinde) des Behältnisses anliegt, so dass dieser mit der Klammer noch weiter gekühlt werden kann. Auf diese Weise kann man kurz vor dem eigentlichen Blasvorgang einen sehr großen Temperaturunterschied zwischen dem Tragring 10d des Kunststoffvorformlings 10 und dem Bereich direkt darunter realisieren, so dass auch aus dem Bereich direkt unter dem Tragring 10d sehr viel Material abgezogen werden kann aber der Tragring 10d durch seine Festigkeit beziehungsweise niedrige Temperatur nicht verformt wird. Das Bezugszeichen 39 kennzeichnet eine Aussparung unterhalb eines Anspritzpunktes des Kunststoffvorformlings.

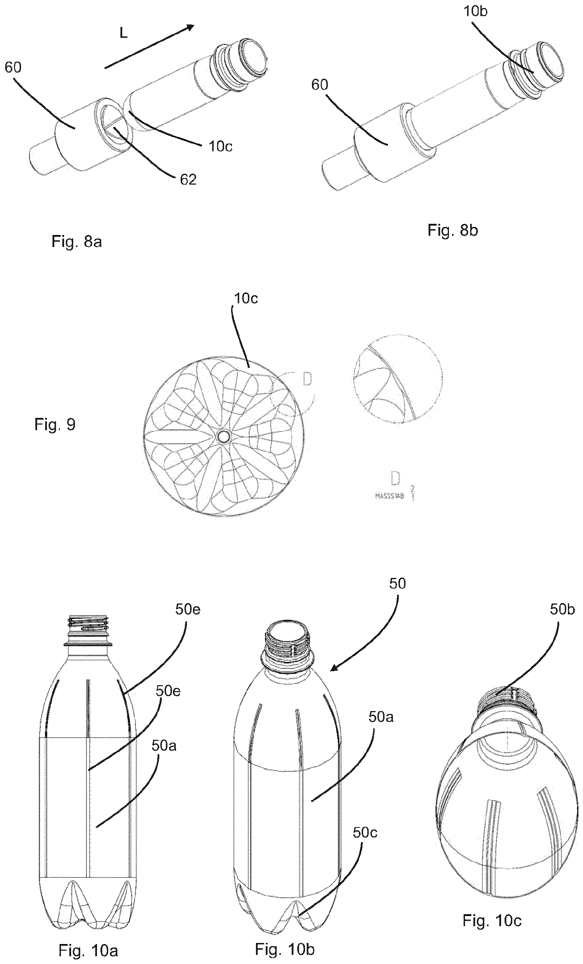

Die Figuren 8a und 8b zeigen eine weitere Darstellung der erfindungsgemäßen Vorrichtung. Hier ist ein Kontaktierungselement 60 vorgesehen, welches speziell zur Temperierung des Bodenbereichs 10c des Behältnisses dient. Auch in diesem Kontaktierungselement 60, welches hier in Längsrichtung L auf den Vorformling zugestellt werden kann, können Rippen 62 vorgesehen sein, welche sich anschließend in dem blasgeformten Behältnis als Materialanhäufung wiederfinden, ohne das hierzu in der entsprechenden Blasform derartige Rippenausbildungen vorhanden sein müssen. In Figur 8b ist ein Zustand gezeigt, in dem das Kontaktierungselement 60 den Kunststoffvorformling 10 kontaktiert. Dieses Kontaktierungselement 60 kann dabei auch durch eine separate Ansteuerung wie eine feststehende Führungskurve oder auch einen motorischen, pneumatischen oder hydraulischen Antrieb zustellbar sein.

Figur 9 zeigt ein Beispiel für eine Ausprägung eines Bodens eines Kunststoffvorformlings beziehungsweise eines Kunststoffbehältnisses.

In den Figuren 10a bis 10c ist ein gefertigtes Behältnis 50 gezeigt. Man erkennt, dass dieses Behältnis 50 an seinem Körper 50a eine Vielzahl von Längsrippen 50e aufweist, die sich damit in der Längsrichtung I des Behältnisses erstrecken. Diese Längsrippen können dabei durch das hier im Rahmen der vorliegenden Erfindung beschriebene vorzugsweise Kühlen des Behältnisses erreicht werden.

Auch die Ausprägung des Bodens 50c des Behältnisses 50 kann durch die Ausgestaltung des in den Figuren 8a und 8b gezeigten Kontaktierungselements gefördert werden. Das Gewinde 50b bleibt, wie oben erwähnt, von dem eigentlichen Umformungsvorgang unbeeinflusst.

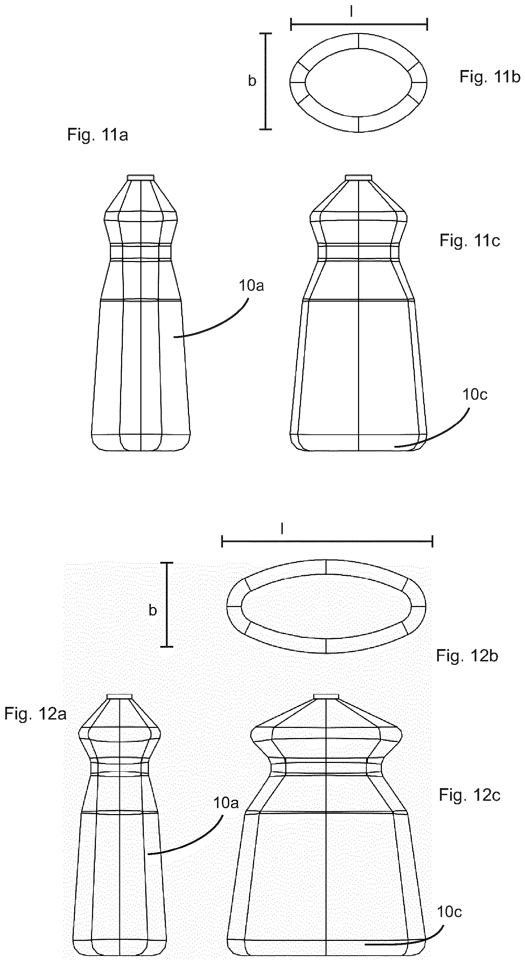

Die Figuren 11a bis 11c beziehungsweise 12a bis 12c zeigen Darstellungen zweier unterschiedlicher Behältnisse. Die in den Figuren 11a bis 11c und 12a bis 12c gezeigten Behältnisse unterscheiden sich insbesondere hinsichtlich des Verhältnisses zwischen ihrer Längsausdehnung I und Breitenausdehnung b. Dieses Verhältnis liegt bei dem in den Figuren 11a bis 11c gezeigten Behältnis bei ca. 1:1,5 und bei den in den Figuren 12a bis 12c gezeigten Behältnis bei ca. 1:2. Entsprechend werden zur Erzeugung des in den Figuren 11a bis 11c gezeigten Behältnisses kleinere Kontaktflächen der Kontaktierungselemente an dem Kunststoffvorformling verwendet, als bei dem in den Figuren 12a bis 12c gezeigten Kunststoffbehältnis. Zur Erzeugung der in 11a bis 11c gezeigten Behältnisses kann beispielsweise durch die Kontaktierungselemente eine Gesamtfläche in einem Bereich von 80 % des Kunststoffvorformlings berührt werden, wo hingegen der entsprechende Anteil der Kontaktierungsfläche im Fall des in Figuren 11a bis 11c gezeigten Behältnisses bei ca. 40 % liegen kann.

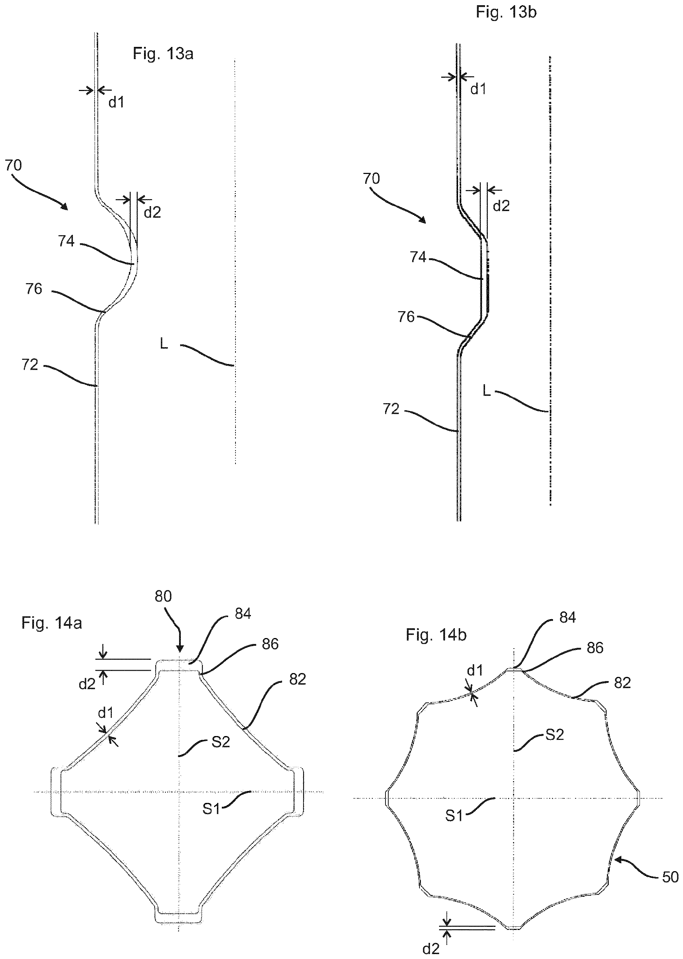

Die Figuren 13a und 13b zeigen zwei teilweise Darstellungen einer Wandung eines hergestellten Kunststoffbehältnisses. Dabei ist nur eine Wandung dargestellt sowie zur besseren Orientierung eine Längsachse L des Behältnisses. Bei dieser Ausgestaltung ist eine ringförmig umlaufende Rille 70 vorgesehen, welche hier gegenüber der Umfangswandung 72 radial nach innen d.h. auf die Längsrichtung des Behältnisses zu ragt.

Das Bezugszeichen 74 bezieht sich auf einen Bereich der Wandung mit einer erhöhten Wanddicke d2, d.h. einer Wanddicke, welche höher ist als eine Wanddicke d1 außerhalb der Rille 70. In einem Übergangsbereich 76 gehen die Wanddicken d1 und d2 kontinuierlich ineinander über. Bei der in Fig. 13a gezeigten Ausführungform ist diese Rille 70 gekrümmt bzw. bogenförmig ausgeführt und bei der in Fig. 13b gezeigten Ausgestaltung nimmt der Bereich 74 mit der erhöhten Wanddicke d2 in der Längsrichtung L des Behältnisses einen geradlinigen Verlauf an.

Die Fig. 14a - 14c zeigen drei Schnittdarstellungen von hergestellten Behältnissen. Bei diesen Ausgestaltungen sind jeweils die bereits oben erwähnten Längstege 80 vorgesehen, Diese Längsstege 80 weisen hier ebenfalls einen Bereich 84 mit einer erhöhten Wanddicke d2 auf. Daneben weist das Behältnis auch hier wieder Bereiche 82 mit geringerer Wanddicke d1 auf, sowie Übergangsbereiche, in denen die Wanddicken ineinander übergehen. Die Längsstege 80 ragen bei den in den Fig. 14a - 14c gezeigten Ausführungsformen jeweils bezüglich der Umfangsrichtung des Behältnisses nach außen bzw. bewirken eine Wölbung nach außen. Die Stege selbst verlaufen hier in der Umfangsrichtung des Behältnisses geradlinig, denkbar wäre jedoch auch ein gekrümmter Verlauf.

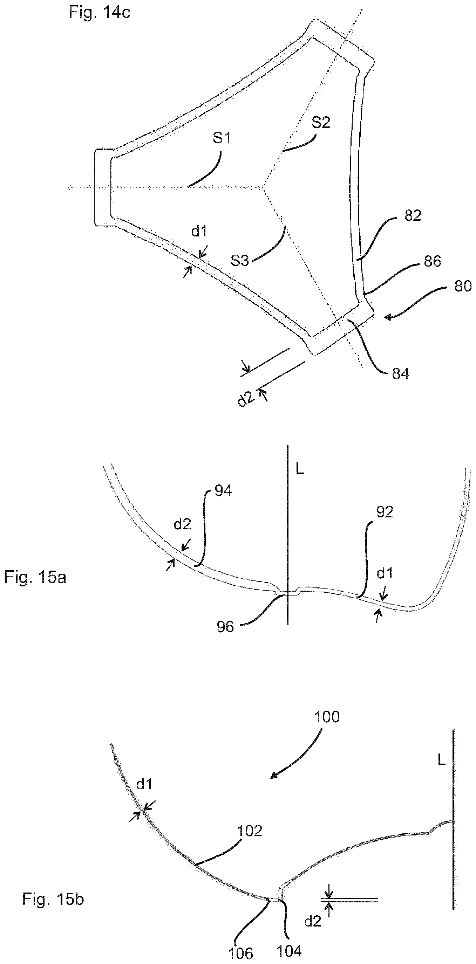

Bei der in Fig. 14a gezeigten Ausführungsform sind insgesamt 4 derartige Stege vorgesehen und das Behältnis weist damit, zumindest in dem gezeigten Abschnitt, zwei Symmetrieebenen S1 und S2 auf. Bei der in Fig. 14b gezeigten Ausführungsform sind insgesamt 8 derartige Stege vorgesehen und das Behältnis weist hier 4 Symmetrieebenen (nur zwei dargestellt) auf. Bei der in Fig. 14c gezeigten Ausführungsform weist das Behältnis 50 insgesamt 3 Stege auf und damit werden auch drei Symmetrieebenen S1, S2, S3 gebildet. Bevorzugt weisen die auf diese weise gebildeten Behältnisse wenigstens eine, bevorzugt wenigstens zwei Symmetrieebenen auf.

Die Fig. 15a und 15b zeigen zwei mögliche Geometrien für einen Boden des Behältnisses, genauer gesagt, eine Bodengeometrie, in der die belasteten Zugbänder mit mehr Material versehen sind, um so die Widerstandsfähigkeit gegen Innendruck zu verbessern. Bei der in Fig. 15a gezeigten Ausführungsform des Bodens (sog. Petaloidboden) bezieht sich das Bezugszeichen 94 auf ein derartiges Zugband mit einer höheren Wandungsdicke d2. In dem Bereich 92, der bei dem Behältnis einen Standfuß ausbildet, ist hingegen eine geringere Wanddicke d1 vorgesehen. Das Bezugszeichen 96 bezieht sich auf einen Anspritzpunkt des Behältnisses.

Bei der in Fig. 15b gezeigten Darstellung ist ein Abschnitt des Bodens 100 dargestellt, wobei auch hier zur Orientierung wieder die Längsachse L des Behältnisses angegeben ist. Die Bodengeometrie ist hier in einem Aufstandsbereich 104 des Bodens mit einer Materialanhäufung versehen, um so die Widerstandsfähigkeit gegen Innendruck zu erhöhen und das Ausstülpen des Bodens 100 zu verhindern. Der Bereich 102 weist hier wieder eine geringere Wanddicke d1 auf.

Die oben beschriebenen Ausgestaltungen der Behältnisse haben bei verschiedenen Prozessen unterschiedliche Vorteile, welche im Folgenden erläutert werden:
Die ringförmige in den Fig. 13a und 13b gezeigte Geometrie ist bei Behältnissen mit Innendruck von Vorteil, da hier die Verformungen des Materials durch die erhöhte Wandstärke vermindert werden können und die Stabilität in diesem Bereich erhöht ist. Der Vorteil liegt in der Formstabilität und auch der Griffstabilität. Daneben können die länglichen Geometrien eine höhere Stapellastfähigkeit der Behältnisse bei stillem Füllgut bewirken.

Die in Fig. 15b gezeigte Ausführungsform mit "Dom" ist gegen Innendruck stabil, benötigt dafür jedoch relativ viel Material im Boden. Normalerweise muss zur Herstellung ein sog. Stepcore - Verfahren angewandt werden, welches kostenaufwendig ist. Die in Fig. 15a gezeigte Bodengeometrie mit Zugband ist sehr widerstandsfähig gegen Innendruck, wobei die entsprechenden Kräfte von den Zugbändern aufgenommen werden. Je mehr Material in die Zugbänder eingebracht wird, desto weniger Gewicht benötigt der restliche Boden.

Bei sog. Hotfill - Behältnissen, bei denen das abzufüllende Getränke in erwärmtem Zustand eingefüllt wird, können die in den Figuren 14a - 14c gezeigten länglichen Geometrien eine höhere Stapellastfähigkeit des Behältnisses bewirken. Daneben ist auf diese Weise auch eine Unterteilung des Behältnisses in starre und flexible Bereiche möglich, so dass das Behältnis Volumenschwankungen ausgleichen kann. Die Stege können in der Tendenz schmaler gestaltet werden, was wiederum mehr Platz für Panels (flexible Bereiche) ermöglicht. Die ringförmige Geometrie wiederum ist bei Behältnissen mit negativem Innendruck von Vorteil, da hier die Verformungen des Materials durch die erhöhte Wandstärke vermindert werden und die Stabilität in diesem Bereich erhöht wird (d.h. eine erhöhte Formstabilität und/oder Griffstabilität erreicht wird). Das Behältnis neigt hier nicht mehr dazu, ovale oder dreieckige Formen anzunehmen. Bei sog. Nitro - Hotfill - Verfahren, bei denen in die Behältnisse neben einer warmen Flüssigkeit auch ein Gas (wie insb. Stickstoff) zugeführt wird, werden bei der ringförmigen Geometrie (vgl. Fig. 13a, 13b) die Verformungen des Materials durch die erhöhte Wandstärke vermindert und die Stabilität in diesem Bereich erhöht.

### Bezugszeichenliste

- 1: Vorrichtung
- 2: Gehäuse
- 4: Kontaktierungselement
- 4a: Kontaktfläche
- 5: Aussparung/Spalt
- 6: Ausrichteinrichtung
- 8: Kontaktierungselement
- 8a: Kontaktfläche
- 10: Kunststoffvorformlinge
- 10a: Körperbereich/Außenwandung
- 10b: Gewinde
- 10c: Bodenbereich Behältnis
- 10d: Tragring
- 12: Träger/Trägerrad
- 14: Kühlstrecke
- 16: Zuführstern/Übergabestern
- 17: Greifelement
- 20: Kontaktierungseinrichtung/Klammereinrichtung
- 26: Kurvenrolle
- 32: Schaltnocken/Schalthebel
- 32a: Vordere Ausnehmung Schaltnocken
- 32b: Anschlagfläche
- 34: Sechskantschrauben
- 36: Federeinrichtung
- 36a: Federbügel
- 36b: Federbügel
- 38: Quersteg
- 39: Aussparung
- 42: Verbindungsstelle
- 44: Träger
- 45: Federungseinrichtung
- 46: Befestigungseinrichtung (z.B. Schraube)/
- 48: Vorsprünge/Längsrippe
- 50: gefertigtes Behältnis
- 50a: Körper des Behältnisses 50
- 50b: Gewinde
- 50c: Boden des Behältnisses
- 50e: Längsrippen
- 52: Heizeinrichtung
- 53: Transportmittel
- 54: Blasformeinheit
- 55: Gehäuse
- 56: Blasstation
- 60: Kontaktierungselement
- 62: Rippen
- 70: umlaufende Rille
- 72, 82: Umfangswandung (mit geringerer Wanddicke d1)
- 74, 84: Bereich der Wandung mit erhöhter Wanddicke d2
- 76, 86: Übergangsbereich
- 80: Längsstege
- 90, 100: Boden
- 92, 102: Bereich des Bodens mit geringerer Wanddicke d1
- 94, 104: Bereich des Bodens mit höherer Wanddicke d2
- 96: Anspritzpunkt
- 106: Übergangsbereich
- S1 - S3: Symmetrieebenen
- d1, d2: Wanddicken
- L: Längsrichtung
- D: Drehachse
- I: Längsausdehnung
- b: Breitenausdehnung
- S1, S2: Schwenkachsen

## Patentansprüche

1. Anlage zur Herstellung von Kunststoffbehältnissen mit einer Vorrichtung (1) zum Erwärmen von Kunststoffvorformlingen (10), mit einer Transporteinrichtung, welche die Kunststoffvorformlinge (10) entlang eines vorgegebenen Transportpfades transportiert, und mit einer Heizeinrichtung (52), welche entlang dieses Transportpfades der Kunststoffvorformlinge (10) angeordnet ist und welche die Kunststoffvorformlinge (10) erwärmt,
wobei die Vorrichtung (1) wenigstens ein erstes stromabwärts bezüglich der Heizeinrichtung (52) angeordnetes Kontaktierungselement (4, 60) zur Beaufschlagung einer Wandung (10a) des Kunststoffvorformlings mit einem sich in einer Umfangsrichtung und/oder Längsrichtung des Kunststoffvorformlings (10) ändernden Temperaturprofil aufweist, welches Kontaktierungselement (4, 60) mit einer Kontaktfläche (4a) einen vorgegebenen und in der Umfangsrichtung und/oder Längsrichtung der Kunststoffvorformlinge (10) begrenzten Bereich der Wandung (10a) des Kunststoffvorformlings (10) berührt, um diesen Bereich mit einem gegenüber von dem Kontaktierungselement (4, 60) nicht berührten Bereichen unterschiedlichen Temperaturprofil zu beaufschlagen und wobei die Anlage eine in der Transportrichtung der Kunststoffvorformlinge (10) der Vorrichtung (1) nachgeordnete Umformungseinrichtung (54) zur Umformung von Kunststoffvorformlingen (10) in Kunststoffbehältnisse (50) aufweist **dadurch gekennzeichnet, dass**
diese Umformungseinrichtung (54) wenigstens eine temperierbare Blasform (58) aufweist, innerhalb derer die Kunststoffvorformlinge zu den Kunststoffbehältnissen umformbar sind, wobei eine Temperatur der Kontaktfläche (4a) einstellbar veränderbar ist.

2. Anlage nach Anspruch 1,
**dadurch gekennzeichnet, dass**
die Vorrichtung (1) eine Zustelleinrichtung aufweist, welche das Kontaktierungselement (4, 60) in einer vorgegebenen Richtung auf den Kunststoffvorformling (10) zustellt.

3. Anlage (1) nach wenigstens einem der vorangegangenen Ansprüche,
**dadurch gekennzeichnet, dass**
die Größe des Bereichs der berührten Wandung in Abhängigkeit von der geometrischen Form des herzustellenden Behältnisses (50) gewählt ist.

4. Anlage (1) nach wenigstens einem der vorangegangenen Ansprüche,
**dadurch gekennzeichnet, dass**
die temperierbare Blasform einen Kanal für ein fließfähiges Temperiermittel aufweist.

5. Anlage (1) nach wenigstens einem der vorangegangenen Ansprüche,
**dadurch gekennzeichnet, dass**
die temperierbare Blasform elektrisch temperierbar ist.

6. Anlage (1) nach wenigstens einem der vorangegangenen Ansprüche,
**dadurch gekennzeichnet, dass**
das Kontaktierungselement (4, 60) wenigstens zeitweise eine Verformung des Kunststoffbehältnisses (10) bewirkt.

7. Anlage (1) nach wenigstens einem der vorangegangenen Ansprüche,
**dadurch gekennzeichnet, dass**
ein Anpressdruck des Kontaktierungselements (4, 60) gegenüber dem Kunststoffvorformling (10) veränderbar ist.

8. Anlage (1) nach wenigstens einem der vorangegangenen Ansprüche,
**dadurch gekennzeichnet, dass**
die Vorrichtung (1) ein zweites Kontaktierungselement (8) aufweist, welches einen zweiten und in der Umfangsrichtung der Kunststoffvorformlinge (10) begrenzten Bereich der Wandung (10a) des Kunststoffvorformlings (10) kontaktiert.

9. Anlage (1) nach wenigstens einem der vorangegangenen Ansprüche,
**dadurch gekennzeichnet, dass**
die Vorrichtung eine Klammereinrichtung (20) aufweist, welche die Kontaktierungselemente (4, 8) enthält und die Kontaktflächen (4a, 8a) auf den Kunststoffvorformling (10) zustellt.

10. Anlage (1) nach wenigstens einem der vorangegangenen Ansprüche,
**dadurch gekennzeichnet, dass**
die Vorrichtung (1) ein weiteres Kontaktierungselement (60) aufweist, welches einen Boden (10c) des Kunststoffvorformlings (10) kontaktiert.

11. Anlage (1) nach wenigstens einem der vorangegangenen Ansprüche,
**dadurch gekennzeichnet, dass**
die Kontaktfläche (4a) gekrümmt ist.

12. Anlage (1) nach wenigstens einem der vorangegangenen Ansprüche,
**dadurch gekennzeichnet, dass**
die Vorrichtung (1) ein der Heizeinrichtung auf dem Transportpfad der Behältnisse nachgeschaltetes Kühlmodul aufweist und die Kontaktierungselemente Bestandteil dieses Kühlmoduls sind.

13. Verfahren zum Erwärmen von Kunststoffbehältnissen, wobei die Kunststoffvorformlinge (10) entlang einer vorgegebenen Transportstrecke transportiert und mittels einer Heizeinrichtung (52) erwärmt werden, wobei in einer Umfangsrichtung und/oder Längsrichtung (L) der Kunststoffvorformlinge (10) ein ungleichmäßiges Temperaturprofil aufgebracht wird, wobei wenigstens ein erstes Kontaktierungselement (4, 60) auf den Kunststoffvorformling (10) zugestellt wird und mit einer Kontaktfläche (4a) einen vorgegebenen und in der Umfangsrichtung und/oder Längsrichtung (L) der Kunststoffvorformlinge (10) begrenzten Bereich einer Wandung (10a) des Kunststoffvorformlings (10) kontaktiert, um diesen Bereich mit einem gegenüber von dem Kontaktierungselement (4, 60) nicht berührten Bereichen unterschiedlichen Temperaturprofil zu beaufschlagen, **dadurch gekennzeichnet, dass** anschließend die Kunststoffvorformlinge mittels einer wenigstens abschnittsweise temperierten Blasform zu Kunststoffbehältnissen umgeformt werden, wobei eine Temperatur der Kontaktfläche (4a) einstellbar veränderbar ist.

## Claims

1. A plant for producing plastics material containers with an apparatus (1) for the heating of plastics material preforms (10), with a conveying device, which conveys the plastics material preforms (10) along a pre-set conveying path, and with a heating device (52), which is arranged along this conveying path of the plastics material preforms (10) and which heats the plastics material preforms (10),
wherein the apparatus (1) has at least one first contacting element (4, 60) arranged downstream with respect to the heating device (52) for acting upon a wall (10a) of the plastics material preform with a temperature profile which varies in a peripheral and/or longitudinal direction of the plastics material preform (10), this contacting element (4, 60) contacting with a contact face (4a) a pre-set region - preferably bounded in the peripheral and/or longitudinal direction of the plastics material preform (10) - of the wall (10a) of the plastics material pre-form (10) in order to act upon this region with a temperature profile which is different from regions not contacted by the contacting element (4, 60), and wherein the plant has a shaping device (54) arranged downstream of the apparatus (1) in the conveying direction of the plastics material preforms (10) for shaping plastics material preforms (10) into plastics material containers (50),
**characterized in that**
this shaping device (54) has at least one blow mould (58) which is capable of being tempered and inside which the plastics material preforms are capable of being shaped to form the plastics material containers, wherein a temperature of the contact face (4a) is variable.

2. A plant according to claim 1,
**characterized in that**
the apparatus (1) has a delivery device which delivers the contacting element (4, 60) to the plastics material preform (10) in a pre-set direction.

3. A plant (1) according to at least one of the preceding claims,
**characterized in that**
the size of the region of the contacted wall is selected in a manner dependent upon the geometrical shape of the container (50) to be produced.

4. An apparatus (1) according to at least one of the preceding claims,
**characterized in that**
the blow mould capable of being tempered has a channel for a flowable tempering agent.

5. An apparatus (1) according to at least one of the preceding claims,
**characterized in that**
the blow mould capable of being tempered is capable of being tempered electrically.

6. An apparatus (1) according to at least one of the preceding claims,
**characterized in that**
the contacting element (4, 60) causes a deformation of the plastics material preform (10) at least for a time.

7. An apparatus (1) according to at least one of the preceding claims,
**characterized in that**
a contact pressure of the contacting element (4, 60) is variable with respect to the plastics material preform (10).

8. An apparatus (1) according to at least one of the preceding claims,
**characterized in that**
the apparatus (1) has a second contacting element (8) which contacts a second region - bounded in the peripheral direction of the plastics material preforms (10) - of the wall (10a) of the plastics material preform (10).

9. An apparatus (1) according to at least one of the preceding claims,
**characterized in that**
the apparatus has a clamp device (20) which contains the contacting elements (4, 8) and which delivers the contact faces (4a, 8a) to the plastics material preform (10).

10. An apparatus (1) according to at least one of the preceding claims,
**characterized in that**
the apparatus (1) has a further contacting element (60) which contacts the base (10c) of the plastics material preform (10).

11. An apparatus (1) according to at least one of the preceding claims,
**characterized in that**
the contact face (4a) is curved.

12. An apparatus (1) according to at least one of the preceding claims,
**characterized in that**
the apparatus (1) has a cooling module arranged downstream of the heating device on the conveying path of the containers, and the contacting elements form a component part of this cooling module.

13. A method of heating plastics material containers, wherein the plastics material preforms (10) are conveyed along a pre-set conveying path and are heated by means of a heating device (52), wherein a nonuniform temperature profile is applied in a peripheral direction and/or longitudinal direction (L) of the plastics material preforms (10),
wherein at least one first contacting element (4, 60) is fed to the plastics material preform (10) and contacts with a contact face (4a) a pre-set region - bounded in the peripheral direction and/or longitudinal direction (L) of the plastics material preforms (10) - of a wall (10a) of the plastics material preform (10), in order to act upon this region with a temperature profile different from regions not contacted by the contacting element (4, 60),
**characterized in that**
the plastics material preforms are then shaped by means of a blow mould tempered at least locally to form plastics material containers, wherein a temperature of the contact face (4a) is variable.

## Revendications

1. Installation de fabrication de contenants en matière plastique, comprenant un système (1) permettant de chauffer des ébauches en matière plastique (10), un dispositif de transport, lequel transporte les ébauches en matière plastique (10) le long d'un trajet de transport prédéfini, et un dispositif de chauffage (52), lequel est agencé le long de ce trajet de transport des ébauches en matière plastique (10) et lequel chauffe les ébauches en matière plastique (10),
dans lequel le système (1) comprend au moins un premier élément de mise en contact (4, 60) qui est agencé en aval par rapport au dispositif de chauffage (52) et qui est destiné à soumettre une paroi (10a) de l'ébauche en matière plastique à un profil de température variant dans une direction périphérique et/ou dans une direction longitudinale de l'ébauche en matière plastique (10), lequel élément de mise en contact (4, 60), au moyen d'une surface de contact (4a), touche une zone de la paroi (10a) de l'ébauche en matière plastique (10), laquelle zone est prédéfinie et délimitée dans la direction périphérique et/ou dans la direction longitudinale des ébauches en matière plastique (10), afin d'exposer cette zone à un profil de température différent par rapport aux zones non touchées par l'élément de mise en contact (4, 60) et dans lequel l'installation présente un dispositif de façonnage (54) destiné à transformer des ébauches en matière plastique (10) en contenants en matière plastique (50) et situé en aval du système (1) dans la direction de transport des ébauche en matière plastique (10), **caractérisé en ce que**
ce dispositif de façonnage (54) comprend au moins un moule de soufflage (58) pouvant être thermo-régulé, à l'intérieur duquel les ébauches en matière plastique peuvent être transformées en contenants en matière plastique, dans lequel une température de la surface de contact (4a) peut varier de manière réglable.

2. Installation selon la revendication 1,
**caractérisée en ce que**
le système (1) comprend un dispositif d'amenée, lequel approche l'élément de mise en contact (4, 60) de l'ébauche en matière plastique (10) dans une direction prédéfinie.

3. Installation (1) selon au moins l'une des revendications précédentes,
**caractérisée en ce que**
la taille de la zone de la paroi touchée est sélectionnée en fonction de la forme géométrique du contenant (50) à fabriquer.

4. Installation (1) selon au moins l'une des revendications précédentes,
**caractérisée en ce que**
le moule de soufflage pouvant être thermo-régulé présente un canal pour un agent de thermorégulation fluide.

5. Installation (1) selon au moins l'une des revendications précédentes,
**caractérisée en ce que**
le moule de soufflage pouvant être thermo-régulé est thermo-régulé de manière électrique.

6. Installation (1) selon au moins l'une des revendications précédentes,
**caractérisée en ce que**
l'élément de mise en contact (4, 60) provoque au moins par intermittence une déformation du contenant en matière plastique (10).

7. Installation (1) selon au moins l'une des revendications précédentes,
**caractérisée en ce que**
une pression d'application de l'élément de mise en contact (4, 60) par rapport à l'ébauche en matière plastique (10) est variable.

8. Installation (1) selon au moins l'une des revendications précédentes,
**caractérisée en ce que**
le système (1) comprend un deuxième élément de mise en contact (8), lequel est en contact avec une deuxième zone de la paroi (10a) de l'ébauche en matière plastique (10), laquelle zone est délimitée dans la direction périphérique des ébauches en matière plastique (10).

9. Installation (1) selon au moins l'une des revendications précédentes,
**caractérisée en ce que**
le dispositif comprend un dispositif de serrage (20), lequel contient les éléments de mise en contact (4, 8) et approche les surfaces de contact (4a, 8a) de l'ébauche en matière plastique (10).

10. Installation (1) selon au moins l'une des revendications précédentes,
**caractérisée en ce que**
le dispositif (1) comprend un autre élément de mise en contact (60), lequel est en contact avec un fond (10c) de l'ébauche en matière plastique (10).

11. Installation (1) selon au moins l'une des revendications précédentes,
**caractérisée en ce que**
la surface de contact (4a) est courbée.

12. Installation (1) selon au moins l'une des revendications précédentes,
**caractérisée en ce que**
le système (1) comprend un module de refroidissement branché en aval du dispositif de chauffage sur le trajet de transport des contenants et les éléments de mise en contact font partie intégrante de ce module de refroidissement.

13. Procédé de chauffage de contenants en matière plastique, dans lequel les ébauches en matière plastique (10) sont transportées le long d'une voie de transport prédéfinie et sont chauffées au moyen d'un dispositif de chauffage (52), dans lequel un profil de température inégal est appliqué dans une direction périphérique et/ou dans une direction longitudinale (L) des ébauches en matière plastique (10),
dans lequel au moins un premier élément de mise en contact (4, 60) est approché de l'ébauche en matière plastique (10) et est en contact au moyen d'une surface de contact (4a) avec une zone d'une paroi (10a) de l'ébauche en matière plastique (10), laquelle zone est prédéfinie et est délimitée dans la direction périphérique et/ou dans la direction longitudinale (L) des ébauches en matière plastique (10), afin d'exposer cette zone à un profil de température différent par rapport aux zones non touchées par l'élément de mise en contact (4, 60),
**caractérisé en ce que** les ébauches en matière plastique sont ensuite transformées en contenants en matière plastique au moyen d'un moule de soufflage pouvant être au moins en partie thermo-régulé, dans lequel une température de la surface de contact (4a) peut être modifiée de manière réglable.
